# EUROPÄISCHE PATENTANMELDUNG

(11) **EP 3 278 960 A1**
(43) Veröffentlichungstag der Anmeldung: **07.02.2018**
(21) Anmeldenummer: 17177543.0
(22) Anmeldetag: 22.06.2017
(51) Int. Cl.: B29C 65/36, B29C 65/60, B60R 19/48, B29L 31/30

(54) **VERFAHREN ZUR BEFESTIGUNG EINES HALTERS FÜR EINEN SENSOR AN EINER VERKLEIDUNG FÜR EIN FORTBEWEGUNGSMITTEL**

(30) Priorität: 04.08.2016 DE 102016214440
(71) Anmelder: Robert Bosch GmbH, 70442 Stuttgart (DE)
(72) Erfinder: Karl, Matthias, 76275 Ettlingen (DE)

(57) **Zusammenfassung**

Es wird ein Verfahren zur Befestigung eines Halters (1) für einen Sensor (2) an einer Verkleidung (3) für ein Fortbewegungsmittel, wobei der Halter (1) und/oder die Verkleidung (3) zumindest anteilig aus Kunststoff gefertigt ist bzw. sind, vorgeschlagen. Das Verfahren umfasst die Schritte:
- Aufbringen einer vordefinierten elektroresistiven Struktur (4) auf den Halter (1) und/oder die Verkleidung (3),
- Induzieren eines elektromagnetischen Wechselfeldes in der elektroresistiven Struktur (4) zum Anschmelzen des Kunststoffes des Halters (1) und/oder der Verkleidung (3), und
- Zusammenführen des Halters (1) und der Verkleidung (3).

## Beschreibung

### Stand der Technik

Die vorliegende Erfindung betrifft ein Verfahren zur Befestigung eines Halters für einen Sensor an einer Verkleidung für ein Fortbewegungsmittel. Insbesondere betrifft die vorliegende Erfindung eine zuverlässige und dauerhaltbare Schmelzverbindung zwischen der Halterung und der Verkleidung.

Fahrzeugverkleidungen bestehen häufig aus weichem Kunststoff, der sich bereits bei relativ niedrigen Temperaturen verflüssigt bzw. schmilzt. Zur Gewichtseinsparung werden entsprechende Fahrzeugverkleidungen lediglich so dick wie notwendig ausgeführt. Eine dauerhaltbare Befestigung im automobilen Bereich eingesetzter Sensoren (z. B. Ultraschallsensoren für die Umfelderkennung) ist aufgrund der Umgebungsbedingungen allein mittels Klebstoff häufig nicht ausreichend. Beim Verschweißen von Kunststoffbauteilen besteht ein Zielkonflikt zwischen einer hinreichend großen Vermischung der angeschmolzenen Bestandteile und einer optisch unvorteilhaften, da zu umfassenden Aufschmelzung der Bestandteile.

Aus fertigungstechnischen Gründen werden die Vorrichtungen zum Halten der Sensoren an der Fahrzeugverkleidung meist erst nach der Herstellung der Fahrzeugverkleidung an der Fahrzeugverkleidung befestigt. Die Bestandteile des Halters sind dabei zumeist ein Schaft zur Aufnahme der Sensoren, der üblicherweise parallel zur Hauptachse (Hauptabstrahlrichtung) des Sensors orientiert ist und eine Halterungs- bzw. Grundplatte, welche an der Innenseite der Fahrzeugverkleidung zumeist parallel zur Oberfläche der Fahrzeugverkleidung orientiert und an der Verbauposition mit der Fahrzeugverkleidung befestigt ist. Bedarfsweise kann am Übergang zwischen der Grundplatte und dem Schaft ein Bereich vorhanden sein, der die Position des Schafts auf der Grundplatte stabilisiert und eine mechanische Versteifung bietet. Der Schaft kann insbesondere eine größere Länge aufweisen, als die Länge der Grundplatte in Richtung der Kontaktoberfläche mit der Verkleidung. Der Schaft kann mehrere (zwei, drei, vier oder mehr) Haltearme aufweisen, welche insbesondere elastisch ausgestaltet sind und einen zwischen ihnen aufzunehmenden Sensor zumindest anteilig umklammern. Hierzu können die distalen Enden der Haltearme Formschlusselemente bzw. Krallen oder Schnapp-/Rast-Elemente aufweisen, welche in korrespondierende Ausnehmungen des Sensors eingreifen oder den Sensor auf einer zur Grundplatte gegenüberliegenden Oberfläche umgreifen.

Aus der Automobilpraxis ist bekannt, dass in bevorzugten Ausprägungen Aktoren, wie z. B. Leuchten, Sensoren etc. auf der Innenseite von Fahrzeugverkleidungen zumindest durch einen Staubschutz (z. B. umfassend ein Gummi) geschützt sind bzw. durch deckelartige Vorrichtungen bspw. mittels Bajonettverschluss am Schaft fixiert sind. Dabei werden die Aktoren bspw. mittels einer Feder in die Halterung gedrückt und durch diese innerhalb der Halterung positioniert. Die Federn können aus Metall, Kunststoff etc. ausgestaltet sein.

Zur Befestigung des Halters an der Fahrzeugverkleidung wird heutzutage mitunter das Torsionsschweißen verwendet. Dabei wird die Halterung in rotatorische Schwingungen um eine zentrische Rotationsachse (z. B. mit Ultraschallfrequenz) versetzt wobei aufgrund der Reibung zwischen der Halterung und der Innenseite der Fahrzeugverkleidung eine lokale Erwärmung erfolgt. Diese führt zum Schmelzen von dort vorhandenen Kunststoffen, woraufhin sich die Halterung bzw. die Grundplatte mit der Innenseite der Fahrzeugverkleidung verbindet. Nachteilig am Torsionsschweißen um eine feststehende Rotationsachse ist, dass die jeweilige Relativgeschwindigkeit der gegeneinander bewegten Körper vom Radius zur Rotationsachse abhängt. In der Patentliteratur werden daher häufig Ringkonstruktionen verwendet, bei welchen die Radien innerhalb des Kontaktbereiches nur in relativ kleinen Toleranzbereichen variieren. Dies verringert zwar die Varianz der erzeugten Temperaturen, verringert jedoch ebenfalls die mögliche Anlagefläche zwischen Grundplatte und Fahrzeugverkleidung.

Es ist eine Aufgabe der vorliegenden Erfindung, eine geeignete Verbindung zwischen einem Halter für einen Sensor und einer Verkleidung für ein Fortbewegungsmittel bereitzustellen. Diese soll möglichst hochwertig (dauerhaltbar) und dennoch optisch unauffällig sein.

### Offenbarung der Erfindung

Die vorstehend identifizierte Aufgabe wird erfindungsgemäß durch ein Verfahren zur Befestigung eines Halters für einen Sensor an einer Verkleidung für ein Fortbewegungsmittel gelöst. Der Sensor kann bspw. ein Ultraschallsensor (Ultraschall-Sende-Empfänger), ein Radarsensor, ein optischer Sensor o. ä. sein. Insbesondere kann der Sensor zur Sammlung von Informationen über das Umfeld eines Fortbewegungsmittels ausgestaltet sein. Der Halter oder die Verkleidung sind zumindest anteilig aus Kunststoff gefertigt. Mit anderen Worten bringt zumindest der Halter oder die Verkleidung dasjenige Material mit, welches durch einen Wärmeeintrag zur gegenseitigen Befestigung aufgeschmolzen werden kann. Zunächst wird eine vordefinierte elektroresistive Struktur auf den Halter und/oder die Verkleidung aufgebracht. Die elektroresistive Struktur kann einen Bestandteil des Halters und/oder der Verkleidung bilden oder zusätzlich zum Halter und der Verkleidung vorgesehen werden. Der Halter kann bspw. eine Verkleidung für einen Stoßfänger eines Fortbewegungsmittels sein. Alternativ oder zusätzlich kann der Halter eine Verkleidung einer Außenhaut eines Fortbewegungsmittels sein. Ein Beispiel hierfür ist eine Außenspiegelverkleidung. Weitere Beispiele sind die Verkleidung einer A-/B-/C-/D-Säule eines Fortbewegungsmittels oder ein Spoiler/Diffusor. Anschließend werden (vor und/oder nach dem Abschalten des elektromagnetischen Wechselfeldes) der Halter und die Verkleidung zusammengeführt. Beispielsweise kann hierbei der Halter in Richtung der (stillstehenden) Verkleidung bewegt werden. Alternativ kann die Verkleidung zum (stillstehenden) Halter bewegt werden. Dies erfolgt bereits vor dem Erstarren des Kunststoffes. Auf diese Weise gehen der Halter und die Verkleidung eine dauerhaltbare Verbindung ein, sobald der Kunststoff vollständig erstarrt ist. Anschließend wird die elektroresistive Struktur durch Induzieren eines elektromagnetischen Wechselfeldes erhitzt. Die eingetragene Wärme wird so gewählt, dass sie den Kunststoff anschmelzt, so dass dieser eine stoffschlüssige und/oder formschlüssige Verbindung mit einem Fügepartner eingehen kann.

Die Unteransprüche zeigen bevorzugte Weiterbildungen der Erfindung.

Die elektroresistive Struktur kann bevorzugt nach dem Zusammenführen zwischen dem Halter und der Verkleidung verbleiben, bis der Kunststoff vollständig erstarrt ist. Mit anderen Worten wird die elektroresistive Struktur zum Bestandteil desjenigen Bauteils, welches sowohl den Halter als auch die Verkleidung aufweist.

Die elektroresistive Struktur kann z.B. als elektrischer Draht und/oder als metallisches Stanzteil (z.B. ein ebener oder raumgreifender Blechleiter) ausgestaltet sein. Alternativ oder zusätzlich weist die elektroresistive Struktur eine strukturiert aufgetragene, elektrisch leitfähige Paste auf, deren Gestalt insbesondere einer späteren Anlagefläche zwischen dem Halter und der Verkleidung entspricht. Auf diese Weise kann eine räumlich wohldefinierte Erwärmung des Halters und/oder der Verkleidung erfolgen. Eine Erwärmung nicht zur stoffschlüssigen Verbindung beitragender Bereiche kann verhindert werden. Dies verbessert die optische Erscheinung des Endproduktes und verhindert eine optisch auffällige Strukturierung von Oberflächen, welche der Verbindung abgewandt sind.

Der Halter kann eine Anlagefläche und eine Sensoraufnahme aufweisen, welche eingangs als "Grundplatte" bzw. "Halter" bezeichnet worden sind. Die Anlagefläche kann an eine solche Seite der Verkleidung gefügt werden, welche einem Haupterfassungsbereich bzw. Hauptempfindlichkeitsbereich bzw. Hauptabstrahlbereich des Sensors gegenüberliegend angeordnet ist. Mit anderen Worten ist der Sensor derart rückseitig zur Verkleidung angebracht, dass die Verkleidung (anteilig) im Erfassungsbereich des Sensors liegt. Somit ist der Sensor versteckt angeordnet, wodurch die Gestalt des erfindungsgemäß hergestellten Produktes optische ansprechend und ebenmäßig ist.

Das elektromagnetische Wechselfeld kann - sofern die Verkleidung das Wechselfeld nicht abschirmt - von der Seite des Haupterfassungsbereiches bzw. Hauptempfindlichkeitsbereiches bzw. Hauptabstrahlbereiches des Sensors erzeugt werden. Vorteilhaft an dieser Verfahrensweise ist, dass beispielsweise Stoßfänger auf einer solchen Seite besser zugänglich sind und daher geringere Restriktionen für die Ausgestaltung der Induktionsvorrichtung bestehen. Überdies kann durch die Anlage an einer konvexen Außenseite der Verkleidung eine sichere Anlage der Induktionsvorrichtung an der Oberfläche der Verkleidung gewährleistet werden.

Die elektroresistive Struktur kann eine Gestalt aufweisen, welche eine Kreisform umfasst. Alternativ kann eine Ovalform vorgesehen sein. Bspw. kann der Sensor bzw. der Halter derart zu der Kreis- bzw. Ovalform angeordnet werden, dass der Haupterfassungsbereich des Sensors innerhalb des aufzuschmelzenden Bereiches die Verkleidung durchdringt. Die Form der Struktur beeinflusst die Gestalt der späteren Schweißverbindung und kann somit gezielte Versteifungsmuster bewirken. Außerhalb der Kreis- bzw. Ovalform können strahlenförmig aus Richtung eines gemeinsamen (zentralen) Punktes ausgehende Linienstrukturen vorgesehen sein. Auf diese Weise kann die Verbindung zwischen dem Halter und der Verkleidung besonders steif und dauerhaft haltbar ausgestaltet werden. Insbesondere können derartige Versteifungsstrukturen hergestellt werden, welche eine Ausbreitung von Schwingungen (im Falle akustischer Sensoren) in andere Bereiche der Verkleidung dämpfen. Dies ermöglicht eine besonders hochwertige Wandlung empfangener bzw. ausgesandter Signale und eine verminderte Störung und eine hohe Kanaltrennung ggf. zusätzlich an der Verkleidung vorzusehender Sensoren.

Der Halter und/oder die Verkleidung können Durchgangskanäle aufweisen, welche beim Zusammenführen durch angeschmolzenes Material des jeweiligen Fügepartners durchströmt werden. Insbesondere bevorzugt weist der Halter bzw. eine am Halter vorgesehene Grundplatte derartige Durchgangskanäle auf, welche insbesondere senkrecht zur Fügefläche orientiert sind. Die Austrittsseite der Durchgangskanäle kann Hinterschneidungen durch das durchgetretene, angeschmolzene Material erfahren, sodass eine formschlüssige Verbindung den übrigen Stoffschluss ergänzt.

Die elektroresistive Struktur kann einen T-Träger, eine Spiralform, einen Federring und/oder eine Struktur nach Art eines Schaufelrades/eines Turbinenrades aufweisen, welche eine Hinterschneidung durch angeschmolzenen Kunststoff begünstigt. Insbesondere kann die Hinterschneidung durch eine plastische Verformung des Kunststoffes erzeugt werden. Insbesondere kann die Hinterschneidung sich im Zuge des Erwärmens des Halters und der Verkleidung ändern. Bevorzugt kann die Hinterschneidung durch das Erwärmen verstärkt werden. In besonders geeigneter Weise kann die Hinterschneidung derart erfolgen, dass Bereiche der elektroresistiven Struktur aufgrund der induktiven Wärme nur anteilig erhitzte bzw. angeschmolzene Bereiche eines Fügepartners oder beider Fügepartner hintergreifen. Insbesondere kann also eine Bewegung/Ausdehnung einer Teilstruktur der elektroresistiven Struktur in parallel zur Fügefläche orientierter Richtung für eine Hinterschneidung sorgen. Bspw. kann sich die elektroresistive Struktur in einen teilweise angeschmolzenen Bereich eines der Fügepartner beim Fügen "hineinschrauben". Die vorstehend genannten Ausgestaltungen ermöglichen eine besonders zuverlässige und dauerhaltbare Verbindung der Fügepartner.

Erfindungsgemäß umfasst die elektroresistive Struktur ein Federelement, welches elastisch verformt wird, wenn die Fügepartner zusammengeführt werden. Wenn die elektroresistive Struktur aufgrund der induzierten Energie erhitzt und der Halter und/oder die Verkleidung angeschmolzen wird, kann sich das Federelement in eine Ursprungsgestalt begeben, indem der angeschmolzene Kunststoff seiner Kraftwirkung nachgibt. Auf diese Weise kann eine besonders zuverlässige Endgestalt für die elektroresistive Struktur sichergestellt werden. Insbesondere hängt diese nicht oder nur in geringem Maße von dem Vorgang des Zusammenführens der Fügepartner ab. Auch dies führt dazu, dass unterschiedliche Fügepartner auf ein und derselben Fertigungslinie in erfindungsgemäßer Weise gefügt werden können.

Eine mögliche Ausgestaltung für die elektroresistive Struktur kann ein metallischer Leiter mit einem T-förmigen Querschnitt, insbesondere einen Doppel-T-förmigen Querschnitt, sein.

Alternativ oder zusätzlich kann die elektroresistive Struktur einem Netz, einer Spiralfeder (in Kontaktflächenrichtung oder senkrecht zu dieser gewunden) und/oder einem Schaufelrad nachempfunden sein.

Sofern Durchgangskanäle in mindestens einem der Fügepartner vorgesehen sind, welche durch angeschmolzenen Kunststoff des anderen Fügepartners durchflossen werden, kann ein andrückendes Werkzeug vorgesehen sein, welches nach Art eines Stempels eine Querschnittsverbreiterung der angeschmolzenen Kunststoffmasse nach einem Durchfließen der Durchgangskanäle bewirkt. Nach Art eines Niets ergibt sich auf diese Weise ein Formschluss, der besonders dauerhaft zuverlässig den entstandenen Verbund gegen ein unerwünschtes Auflösen sichert.

Um eine unerwünschte Verformung sichtbarer Oberflächenbereiche der Fahrzeugverkleidung während des erfindungsgemäßen Verfahrens zu verhindern, kann vorgesehen sein, dass eine gut wärmeleitfähige oder sogar aktiv gekühlte Auflage der Fahrzeugverkleidung im Bereich der lokalen induktiven Erhitzung die Verkleidung kühlt. Somit kann sichergestellt werden, dass eine durchdringende Erhitzung verzögert bzw. verhindert wird und die sichtbare Oberfläche der Fahrzeugverkleidung in ihrer ursprünglichen Gestalt verbleibt.

### Kurze Beschreibung der Zeichnungsfiguren

Nachfolgend werden Ausführungsbeispiele der vorliegenden Erfindung unter Bezugnahme auf die begleitenden Zeichnungen im Detail erläutert. In den Zeichnungen ist:
- Figur 1: eine schematische Seitenansicht veranschaulichend ein mögliches Ergebnis eines erfindungsgemäßen Verfahrens;
- Figur 2: eine Seitenansicht veranschaulichend Schritte eines Ausführungsbeispiels eines erfindungsgemäßen Verfahrens;
- Figur 3: eine Seitenansicht veranschaulichend weitere Schritte des Ausführungsbeispiels des erfindungsgemäßen Verfahrens;
- Figur 4: eine schematische Skizze veranschaulichend ein erstes Ausführungsbeispiel einer räumlichen Erstreckung einer erfindungsgemäß verwendbaren elektroresistiven Struktur;
- Figur 5: eine schematische Skizze veranschaulichend ein zweites Ausführungsbeispiel einer räumlichen Erstreckung einer erfindungsgemäß verwendbaren elektroresistiven Struktur
- Figur 6a: eine Prinzipskizze einer federelastischen Ausführung einer elektroresistiven Struktur in einem beim Zusammenführen deformierten Zustand;
- Figur 6b: eine Prinzipskizze eines Ausführungsbeispiels einer elektroresistiven Struktur gemäß Figur 6a nach einem Zurückkehren in ihren Ursprungszustand;
- Figur 7: eine Prinzipskizze veranschaulichend einen durch Durchgangskanäle hergestellten Formschluss eines Halters und einer Verkleidung gemäß einem weiteren Ausführungsbeispiel einer erfindungsgemäßen Anordnung; und
- Figur 8: eine geschnittene Seitenansicht eines Formschlusses gemäß einem weiteren Ausführungsbeispiel einer erfindungsgemäßen Anordnung.

### Ausführungsformen der Erfindung

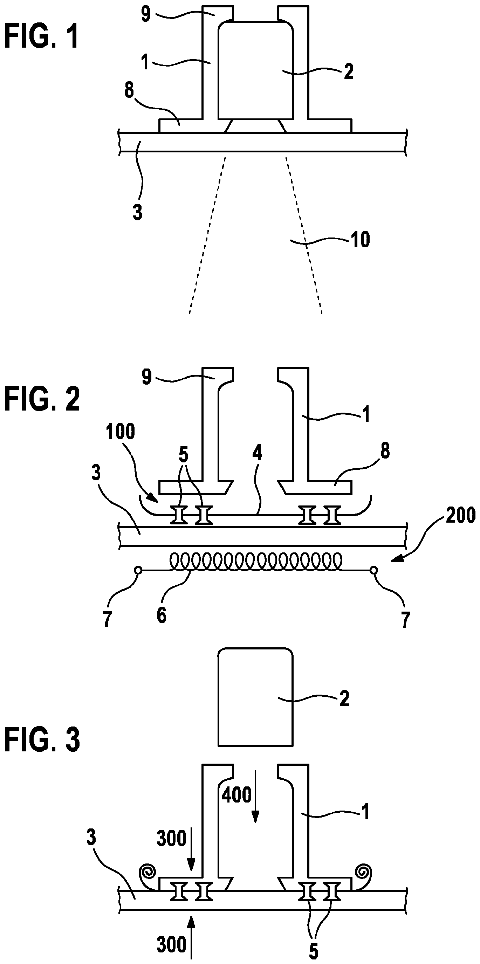

Figur 1 zeigt einen Ultraschallsensor 2 als Beispiel eines Sensors, welcher in einem Halter 1 angeordnet und durch diesen an einer Fahrzeugverkleidung 3 als Beispiel einer Verkleidung eines Fortbewegungsmittels (nicht dargestellt) ist. Der Halter 1 weist eine Anlagefläche 8 auf, welche erfindungsgemäß mit der Fahrzeugverkleidung 3 verschweißt ist. Die federelastischen Strukturen der Sensoraufnahme 9 fixieren den Ultraschallsensor 2 gegenüber einer in Richtung der Fahrzeugverkleidung 3 vorgesehenen Stützstruktur 19. Derart angeordnet ist der Ultraschallsensor 2 eingerichtet, einen Erfassungsbereich 10 jenseits der Fahrzeugverkleidung 3 aufzuspannen bzw. Ultraschallsignale in den Erfassungsbereich 10 abzustrahlen. Die Hauptachse 20 des Ultraschallsensors 2 ist somit im Wesentlichen senkrecht zur Anlagefläche 8 orientiert.

Figuren 2 und 3 zeigen eine Darstellung von Fertigungsschritten 100 bis 400 bei der Fertigung einer in Figur 1 dargestellten Anordnung. Zunächst wird im Fertigungsschritt 100 nach Fig. 2 zwischen die Verkleidung 3 und den Halter 1 eine vordefinierte elektroresistive Struktur eingebracht, welche einen elektrischen Leiter 4 und Doppel-T-Profile 5 aufweist. Der elektrische Leiter 4 wird in Fertigungsschritt 200 durch eine Anordnung einer Induktionsspule 7 und Anlegen einer elektrischen Spannung an deren Elektroden 7 erhitzt. Hierbei durchdringt das elektromagnetische Wechselfeld der Spule 6 die Verkleidung 3 und erzeugt induktive Wärme im Leiter 4 sowie in den Doppel-T-Profilen 5. Eine konduktive Erwärmung des Leiters 4 und der Doppel-T-Profile 5 kann entfallen, weshalb sich der Fertigungsschritt einfacher gestaltet. Insbesondere die Positionierung der Spule 6 gegenüber dem Leiter 4 und den Doppel-T-Profilen 5 muss nicht so exakt erfolgen, wie dies bei einem konduktiven Energieeintrag erforderlich ist.

Figur 3 zeigt weitere Fertigungsschritte, welche sich an die in Verbindung mit Figur 2 dargestellten und erläuterten Fertigungsschritte 100 und 200 anschließen. In Schritt 300 wird der Halter 1 mit der Verkleidung 3 zusammengeführt. Aufgrund der Tatsache, dass die Doppel-T-Strukturen 5 und der elektrische Leiter 4 die einander zugewandten Oberflächen der Verkleidung 3 sowie der Anlagefläche 8 geschmolzen haben, dringen die Doppel-T-Strukturen 5 sowohl in die Fahrzeugverkleidung 3 sowie den Halter 1 ein und werden vom angeschmolzenen Kunststoff umströmt. Auf diese Weise bildet sich ein Formschluss aus, welcher nach einem Erstarren des Kunststoffs für eine andauernde und somit sichere Verbindung führt. In Schritt 400 wird schließlich der Ultraschallsensor 2 in den Halter 1 eingesteckt, was ebenfalls in Hauptabstrahlrichtung des Ultraschallsensors 2 erfolgt.

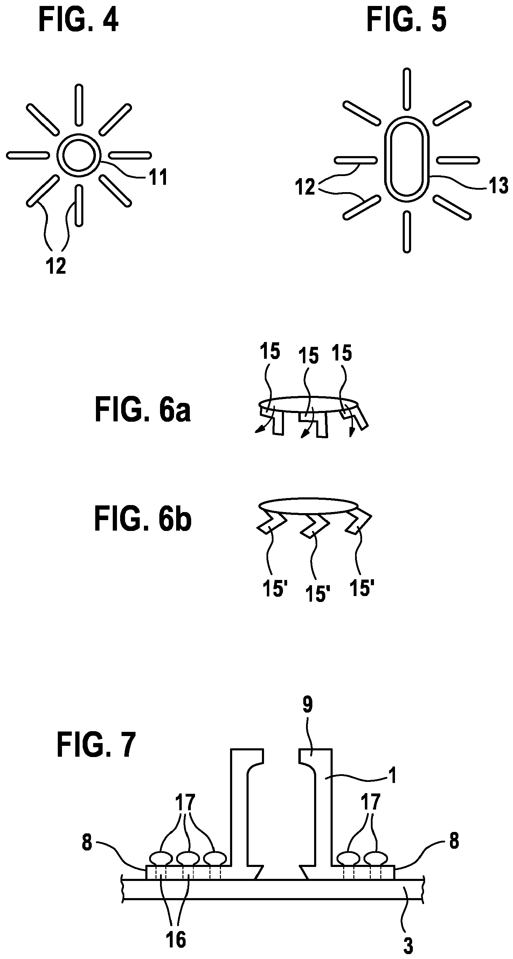

Figur 4 zeigt ein Muster einer elektroresistiven Struktur 4, welches mittig eine kreisringförmige Struktur 11 und von einem Mittelpunkt des Kreisrings in radialer Richtung verlaufende Strahlensegmente 12 außerhalb des Kreisrings aufweist. Die Strahlensegmente 12 versteifen den Bereich des Halters 1 bzw. der Verkleidung 3 außerhalb der kreisringförmigen Struktur 11. Die kreisringförmige Struktur 11 bietet in ihrem Auge eine nicht durch die thermische Erwärmung beeinflusste Fläche, durch welche der Ultraschallsensor 2 mit geringstmöglicher Dämpfung den Erfassungsbereich 10 aufspannen kann.

Figur 5 zeigt ein Muster eines Ausführungsbeispiels einer elektroresistiven Struktur 4, bei welcher statt einem in Figur 4 dargestellten Kreisringsegment eine Ovalstruktur 13 vorgesehen ist. Aufgrund dieser Ausgestaltung ist die Begrenzung der schwingungsfähigen Fläche in der Senkrechten nicht so eng wie in der Waagerechten, wodurch bekannterweise die Richtcharakteristik bei akustischen Sensoren vorteilhaft beeinflusst werden kann.

Anstatt - wie in den Figuren 4 und 5 zeichnerisch dargestellt - die Kreis- bzw. Ovalstruktur 11, 13 räumlich getrennt von den strahlenförmigen Strukturen 12 zu fertigen, können die Strahlen in Richtung ihres gemeinsamen Mittelpunktes konjunkt mit der Kreis- bzw. Ovalstruktur 11, 13 ausgeführt werden.

Figur 6a zeigt eine Ausführungsform einer elektroresistiven Struktur 4, welche federelastisch ausgestaltet ist. Die elektroresistive Struktur 4 ist ringförmig ausgestaltet, wobei Schaufeln 15 nach Art eines Turbinenrotors in Umfangsrichtung verteilt vorgesehen sind. Indem die Schaufeln 15 an die Ringstruktur aufgrund des Zusammenführens des (nicht dargestellten) Halters und der (nicht dargestellten) Verkleidung angeklappt sind, ist ein einfaches Eindringen der Schaufeln 15 in angeschmolzene Kunststoffbereiche möglich. Pfeile P kennzeichnen eine Richtung, in welche die Schaufeln 15 hierbei streben.

Figur 6b zeigt diejenige Form, in welche die in Figur 6a dargestellte elektroresistive Struktur 4 strebt bzw. sich nach hinreichend umfassendem Anschmelzen des Kunststoffes (in ihre Ausgangsform) verformt. Erkennbar weisen die Schaufeln 15 nun einen Formschluss mit dem angeschmolzenen Kunststoff auf, sofern man davon ausgeht, dass sich die Anlagefläche bzw. die Verkleidung 3 in vertikaler Richtung (sh. Figuren 1 bis 3) einander gegenüberliegen.

Figur 7 zeigt eine geschnittene Seitenansicht eines Ausführungsbeispiels einer erfindungsgemäß hergestellten Anordnung, bei welcher die Anlagefläche 8 zusätzlich Durchgangslöcher 16 aufweist, durch welche geschmolzenes Kunststofffluid geströmt ist. Jenseits der Anlagefläche 8 wurde durch einen (nicht dargestellten) Stempel eine Aufweitung 17 des Kunststoffes noch vor dem Erstarren bewirkt, wodurch sich ein Formschluss nach Art von Nieten ergibt.

## Patentansprüche

1. Verfahren zur Befestigung eines Halters (1) für einen Sensor (2) an einer Verkleidung (3) für ein Fortbewegungsmittel, wobei der Halter (1) und/oder die Verkleidung (3) zumindest anteilig aus Kunststoff gefertigt ist bzw. sind, umfassend die Schritte:
- Aufbringen (100) einer vordefinierten elektroresistiven Struktur (4) auf den Halter (1) und/oder die Verkleidung (3),
- Induzieren (300) eines elektromagnetischen Wechselfeldes in der elektroresistiven Struktur (4) zum Anschmelzen des Kunststoffes des Halters (1) und/oder der Verkleidung (3), und
- Zusammenführen (400) des Halters (1) und der Verkleidung (3).

2. Verfahren nach Anspruch 1, wobei die elektroresistive Struktur (4) nach dem Zusammenführen zwischen dem Halter (1) und der Verkleidung (3) bis nach einem Erstarren des Kunststoffs verbleibt.

3. Verfahren nach Anspruch 1 oder 2, wobei die elektroresistive Struktur (4)
- eine Paste und/oder
- einen Drahtleiter und/oder
- einen Blechleiter
umfasst.

4. Verfahren nach einem der vorstehenden Ansprüche, wobei der Halter (1) eine Anlagefläche (8) und eine Sensoraufnahme (9) aufweist, wobei
- die Anlagefläche (8) an eine solche Seite der Verkleidung (3) gefügt wird, welche einem Haupterfassungsbereich (10) des Sensors (2) gegenüber liegt, und/oder
- das elektromagnetische Wechselfeld von der Seite eines Haupterfassungsbereiches (10) des Sensors (2) erzeugt wird.

5. Verfahren nach einem der vorstehenden Ansprüche, wobei die elektroresistive Struktur (4) eine Gestalt aufweist, welche
- eine Kreisform (11) und/oder
- eine Ovalform (13) und/oder
- strahlenförmig aus Richtung eines gemeinsamen Punktes ausgehende Linienstrukturen (12)
umfasst.

6. Verfahren nach einem der vorstehenden Ansprüche, wobei der Halter (1) und/oder die Verkleidung (3) Durchgangskanäle aufweist bzw. aufweisen, welche beim Zusammenführen durch angeschmolzenen Kunststoff des jeweils anderen Fügepartners durchströmt werden, wobei sich insbesondere an einer Austrittsseite der Durchgangskanäle Hinterschneidungen (17) durch den angeschmolzenen Kunststoff ausbilden.

7. Verfahren nach einem der vorstehenden Ansprüche, wobei die elektroresistive Struktur (4) eine bezüglich einer Richtung des Zusammenführens ausgestaltete Hinterschneidung aufweist.

8. Verfahren nach einem der vorstehenden Ansprüche, wobei die elektroresistive Struktur (4) im Zuge der Formänderung in Richtung ihrer Ausgangsgestalt ausbildet.

9. Verfahren nach einem der vorstehenden Ansprüche, wobei das Induzieren nach dem Zusammenführen, insbesondere auch während des Zusammenführens, erfolgt.
